# EUROPEAN PATENT APPLICATION

(11) **EP 4 836 158 A1**
(43) Date of publication of application: **04.11.2026**
(21) Application number: 25768536.2
(22) Date of filing: 26.02.2025
(51) Int. Cl.: H01M 50/383, H01M 50/325, H01M 10/6567, H01M 10/613, H01M 10/6568

(54) **BATTERY MODULE AND BATTERY PACK COMPRISING SAME**

(30) Priority: 06.03.2024 KR 20240032004
(71) Applicant: LG Energy Solution, Ltd., Seoul 07335 (KR)
(72) Inventor: JANG, Cheol Han, Daejeon 34122 (KR); KIM, Dooseung, Daejeon 34122 (KR)
(74) Representative: Plasseraud IP
(86) International application number: PCT/KR2025/002672
(87) International publication number: WO 2025/188012

(57) **Abstract**

A battery module according to certain embodiments of the present disclosure includes: a battery cell stack in which a plurality of battery cells are stacked, a module frame that houses the battery cell stack, a coolant line through which a coolant flows into the inside of the module frame or through which the coolant flows out from the inside of the module frame, and a venting valve disposed in the coolant line, wherein gas generated inside the battery module may be discharged through the venting valve via the coolant line.

## Description

### [TECHNICAL FIELD]

### Cross-Reference to Related Application(s)

This application claims priority to and the benefit of Korean Patent Application no. KR10-2024-0032004, filed on March 6, 2024, with the Korean Intellection Property Office, the contents of which are incorporated herein by reference in its entirety.

The present disclosure relates to a battery module and a battery pack including the same, and more particularly, to a battery module that can not only improve cooling efficiency and thus enhance cooling performance, but also prevent propagation of a vent gas emitted due to a thermal runaway phenomenon that occurs in the battery module, to adjacent battery modules, and a battery pack including the same.

### [BACKGROUND ART]

As mobile devices have been increasingly developed, and the demand for such mobile devices has increased, the demand for secondary batteries as energy sources is also rapidly increasing. Accordingly, much research on secondary batteries satisfying various needs has been carried out.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, with a continuous rise of the necessity for a large-capacity secondary battery structure, including the utilization of the secondary battery as an energy storage source, there is a growing demand for a battery pack of a medium or large-sized module structure which is an assembly of battery modules in which a plurality of secondary batteries are connected in series/parallel.

Meanwhile, when a plurality of battery cells are connected in series/parallel to configure a battery pack, it is common to configure a battery module composed of at least one battery cell first and then configure a battery pack by using at least one battery module and adding other components.

Since battery cells constituting such a medium or large-sized battery module are composed of secondary batteries which can be charged and discharged, such a high-output large-capacity secondary battery generates a large amount of heat in a charge and discharge process. In this case, heat generated from the large number of battery cells is added up in a narrow space, so that the temperature can rise more quickly and excessively. In other words, a battery module in which a large number of battery cells are stacked, and a battery pack equipped with such battery modules can obtain high output, but it is not easy to remove heat generated from the battery cells during charging and discharging. When the heat dissipation of the battery cells is not properly performed, deterioration of the battery cells is accelerated, the lifespan is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since a plurality of battery modules are concentratedly disposed to increase the mileage of the vehicle, the flame or heat generated in one battery module can easily propagate to an adjacent battery module, which may eventually lead to ignition or explosion of the battery pack itself.

Furthermore, since the battery pack consists of a structure in which a plurality of battery modules are combined, it is heavy and unsuitable for loading a plurality of batteries into a means of transportation such as an automobile, and therefore it is necessary to improve the energy density.

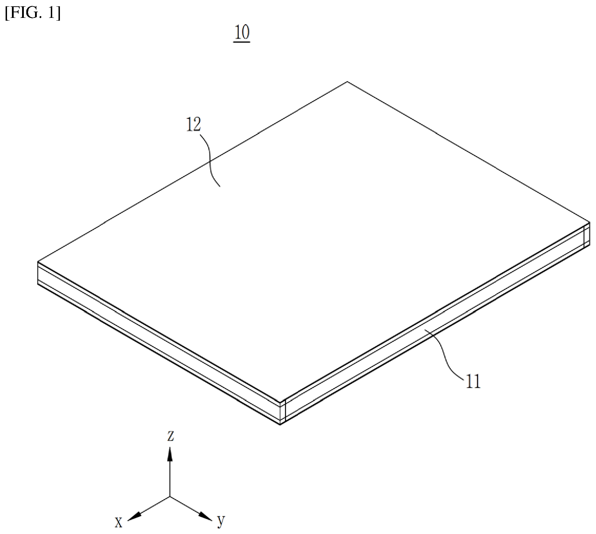

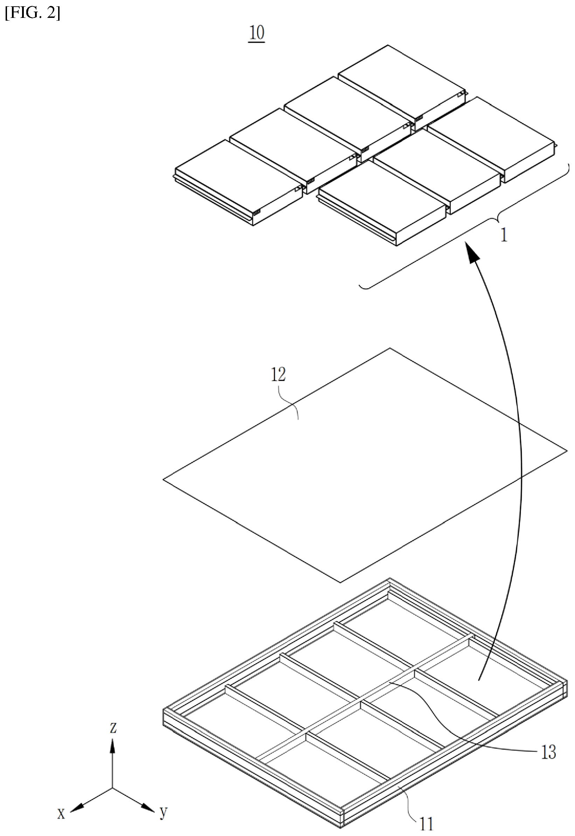

FIG. 1 is a perspective view showing a conventional battery pack. FIG. 2 is an exploded perspective view of the battery pack of FIG. 1.

Referring to FIGS. 1 and 2, a conventional battery pack 10 includes a lower pack frame 11 on which a plurality of battery modules 1 are mounted, an upper pack frame 12 located in an upper part of the battery modules 1, and an internal beam 13 that partitions the position where the battery modules 1 are mounted within the battery pack 10.

In this way, when a battery module 1 is mounted in a battery pack 10, the energy density of the battery pack 10 decreases due to the internal beam 13 that partitions between the battery modules 1, which causes a problem that more battery packs 10 must be provided in order to satisfy the efficiency required for the device or the like. Furthermore, due to the weight of the battery pack 10, there is a limit to the number of battery packs 10 that can be provided in a device. Therefore, in order to reduce the weight of the battery pack 10 and at the same time, increase the energy density of the battery pack 10, there is a need to mount more battery modules 1 in the battery pack 10.

As shown in FIGS. 1 and 2, the conventional battery pack 10 has a form wherein a plurality of battery modules 1 are housed. Therefore, in the case where a thermal runaway phenomenon occurs in any one of the plurality of battery modules 1, there is a need to develop a structure, a method or the like that can prevent the vent gas generated in the battery module 1 in which the thermal runaway phenomenon occurs from propagating to other battery modules 1 and causing the thermal runaway phenomenon to propagate to other battery modules 1.

In addition, since the conventional battery module 1 and battery pack 10 do not directly cool the battery cell stack provided in the battery module 1, there is a need to develop more effective methods for improving cooling efficiency.

### [DETAILED DESCRIPTION OF THE INVENTION]

### [Technical Problem]

Therefore, it is an object of the present disclosure to provide a battery module that can not only improve cooling efficiency and thus enhance cooling performance, but also prevent propagation of a vent gas emitted due to a thermal runaway phenomenon that occurs in the battery module, to adjacent battery modules, and a battery pack including the same.

However, the technical objects to be solved by embodiments of the present disclosure are not limited to the above-described objects, and can be variously expanded within the scope of the technical idea included in the present disclosure.

### [Technical Solution]

According to certain aspects of the present disclosure, there is provided a battery module comprising: a battery cell stack in which a plurality of battery cells are stacked, a module frame that houses the battery cell stack, a coolant line through which a coolant flows into the inside of the module frame or through which the coolant flows out from the inside of the module frame, and a venting valve disposed in the coolant line, wherein gas generated inside the battery module is discharged through the venting valve via the coolant line.

The venting valve may discharge gas in the coolant line when a pressure of the coolant line reaches a prescribed pressure.

The venting valve may comprise a valve inlet port into which gas in the coolant flows, a main body part that forms an internal space through which the gas flowing into the valve inlet port flows, and a blocking member that is housed in the internal space and movable to close the valve inlet port or to be spaced apart from the internal space to form a first flow path through which the gas flows

The blocking member further comprises an elastic member that presses the blocking member in a direction in which the blocking member closes the valve inlet port, and the blocking member may move in a direction spaced apart from the internal space when the pressure of the coolant line reaches the prescribed pressure, thereby forming the first flow path.

The venting valve further comprises a cap part through which the discharge direction of the gas is guided, and a valve outlet port through which the gas is discharged, wherein the cap part may comprise a second flow path in which the path of gas flowing in from the main body part is bent.

The cap part comprises a plate-like part spaced apart from the main body part and disposed so as to face the first flow path, and the separation space between the main body part and the plate-like part may be opened so as to communicate with the outside.

The cap part may further comprise a skirt part that extends from an edge of the plate-like part toward the main body part.

The battery module may further comprise an inlet port that is connected to the coolant line and through which a coolant flows into the inside of the module frame, an outlet port that is connected to the coolant line and through which the coolant flows out from the inside of the module frame; and a filter unit disposed at at least one of: between the inlet port and the venting valve and between the outlet port and the venting valve among the coolant lines.

The filter unit may comprise a filter inlet port into which a coolant flows, and a filter member that filters the coolant flowing in from the filter inlet port.

The filter inlet port may comprise a diffusion part whose cross-sectional area increases as it goes toward the filter member.

The filter unit further comprises an elastic member connected to the filter member, the filter member is movable between a first position where the coolant is filtered and a second position where the coolant is bypassed, the filter member is maintained in the first position by the elastic member, and when the pressure applied to the filter member reaches a prescribed filter pressure, the filter member moves from the first position to the second position.

The prescribed filter pressure may be a pressure at which the force applied to the filter member exceeds a restoring force of the elastic member.

The filter unit may further comprise a position sensor that senses movement of the filter member from the first position to the second position.

The coolant may comprise an insulating coolant or a nonflammable coolant.

According to certain other aspects of the present disclosure, there is provided a battery pack comprising a plurality of battery modules according to the above-mentioned embodiments, wherein the coolant line may comprise a first coolant line connected to the inlet port of each of the plurality of battery modules, and a second coolant line connected to the outlet port of each of the plurality of battery modules.

The venting valve may be disposed between the inlet ports of each of the plurality of battery modules and between the outlet ports of each of the plurality of battery modules, respectively.

The venting valve may be further disposed between the uppermost stream of the first coolant line and the inlet port of the battery module disposed most adjacent to the uppermost stream, and between the lowermost stream of the second coolant line and the outlet port of the battery module disposed most adjacent to the lowermost stream, respectively.

The battery pack may further comprise a filter unit disposed between the inlet port of each of the plurality of battery modules and the venting valve located on the flowing direction side of the first coolant line from the inlet port, and between the outlet port of each of the plurality of battery modules and the venting valve located on the flowing direction side of the second coolant line from the outlet port, respectively.

The filter unit may be further disposed between the uppermost stream of the first coolant line and the venting valve disposed most adjacent to the uppermost stream.

The battery pack further comprises a pressure sensor that measures the pressure of at least one of the first coolant line and the second coolant line, wherein the pressure sensor may be disposed at least one of: between the uppermost stream of the first coolant line and the filter unit disposed most adjacent to the uppermost stream, and between the lowermost stream of the second coolant line and the filter unit disposed most adjacent to the lowermost stream.

The battery pack may further comprise a processor that outputs an alarm signal when the pressure measured by the pressure sensor deviates from a prescribed reference pressure.

### [Advantageous Effects]

A battery module and a battery pack including the same according to certain embodiments of the present disclosure can increase the cooling efficiency through direct cooling of the coolant to the battery cell, thereby increasing the energy density.

In addition, since the vent gas emitted due to a thermal runaway phenomenon that occurs in the battery module can be prevented from propagating to an adjacent battery module, it is possible to improve the stability of the battery module and the battery pack including the same even if a specific situation such as the thermal runaway phenomenon occurs.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a perspective view showing a conventional battery pack.
FIG. 2 is an exploded perspective view of the battery pack of FIG. 1.
FIG. 3 is a perspective view showing a battery module according to certain embodiments of the present disclosure.
FIG. 4 is an exploded perspective view of the battery module of FIG. 3.
FIG. 5 is a plan view showing one of the battery cells included in the battery cell stack of FIG. 4.
FIG. 6 is a view of the battery module of FIG. 3 as viewed along the -x-axis direction on the yz plane.
FIG. 7 is a view of the inlet port as viewed along the -x-axis direction on the yz plane.
FIG. 8 is a conceptual diagram showing an exemplary embodiment of the venting valve shown in FIG. 6.
FIG. 9 is a conceptual diagram showing other exemplary embodiments of the venting valve shown in FIG. 8.
FIG. 10 is a conceptual diagram showing an exemplary embodiment of the filter unit of FIG. 6.
FIG. 11 is a conceptual diagram showing a modified embodiment of the filter unit shown in FIG. 10.
FIG. 12 is a perspective view of a battery pack including a battery module according to certain embodiments of the present disclosure.
FIG. 13 is an exploded perspective view of the battery pack shown in FIG. 12.
FIG. 14 is a conceptual diagram for explaining the positions at which the venting valve and filter unit are disposed in the battery pack.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

In the embodiments above, expressions indicating directions such as "front," "rear," "left," "right," "up," and "down" have been used. These expressions are used only to facilitate the description, and may vary, for example, depending on the location of a target object or an observer.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Now, specific embodiments of the present disclosure will be described.

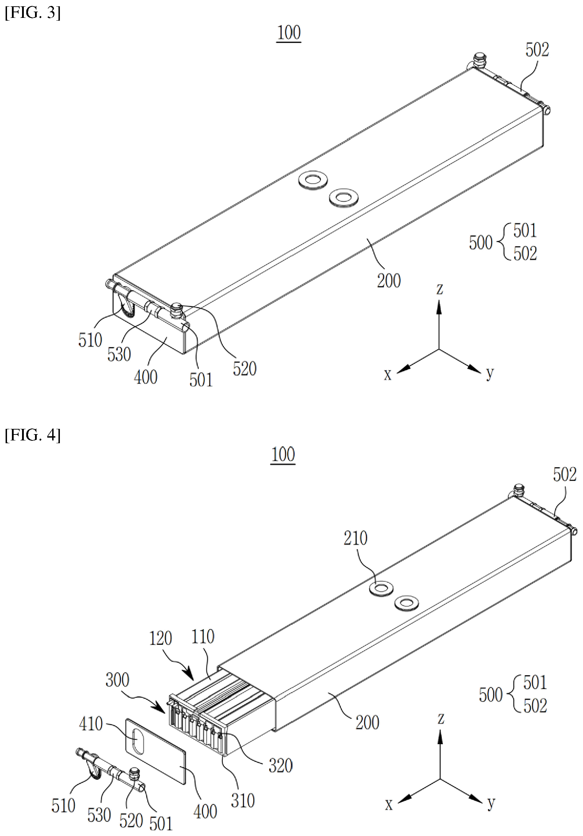

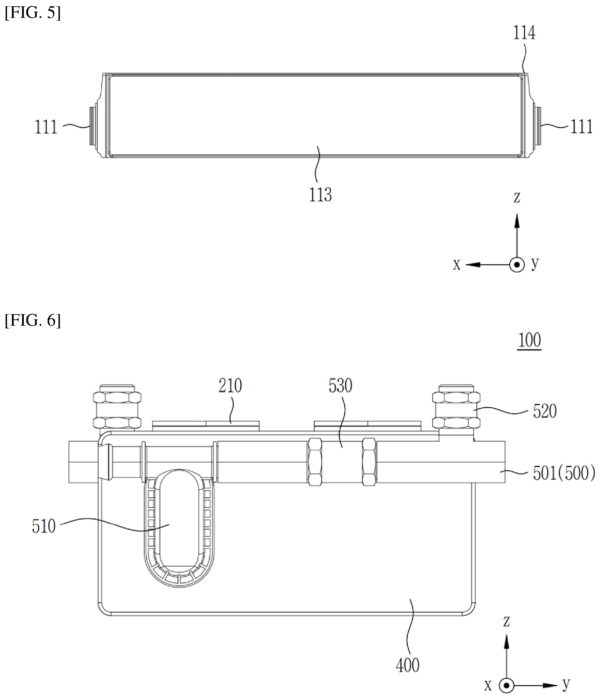

FIG. 3 is a perspective view showing a battery module according to certain embodiments of the present disclosure. FIG. 4 is an exploded perspective view of the battery module of FIG. 3. FIG. 5 is a plan view showing one of the battery cells included in the battery cell stack of FIG. 4.

Referring to FIGS. 3 to 5, a battery module 100 according to certain embodiments of the present disclosure includes a battery cell stack 120 formed by stacking a plurality of battery cells 110, a module frame 200 that houses the battery cell stack 120, an inlet port 510 through which coolant flows into the inside of the module frame 200, an outlet port 516 through which coolant flows out from the inside of the module frame 200, a first coolant line 501 connected to the inlet port 510, a second coolant line 502 connected to the outlet port 516, and a venting valve 520 and a filter unit 530 disposed in the first coolant line 501 and the second coolant line 502, respectively.

First, the battery cell 110 may be a pouch-shaped battery in which an electrode assembly having electrode leads 111 protruding in one direction or both directions is housed in a pouch case 114. However, this is only one example, and a battery cell according to certain other embodiments of the present disclosure may be a prismatic battery. For convenience of explanation, a battery cell 110 which is a pouch-shaped battery will be mainly described below.

The battery cells 110 may have a rectangular sheet shape. The battery cell 110 may be formed by housing an electrode assembly in a pouch case 114 made of a laminate sheet including a resin layer and a metal layer, and then adhering the outer peripheral side of the pouch case 114. In one embodiment, the battery cell 110 may have a structure in which two electrode leads 111 face each other and protrude from one end and the other end of the cell main body 113. In another embodiment, a structure in which all the electrode leads 111 of the battery cells 110 protrude in one direction is also possible. One of the electrode leads 111 is a positive electrode lead, and the other is a negative electrode lead.

The battery cell 110 may be produced by adhering the peripheral part of the pouch case 114 in a state in which the electrode assembly (not shown) is housed in the pouch case 114. In another embodiment, the battery cell 110 may be configured such that in a state where one side of the pouch case 114 is folded, the electrode assembly is housed and the remaining sides are sealed.

The pouch case 114 of the laminate sheet may include an inner resin layer for sealing, a metal layer for preventing penetration of materials, and an outer resin layer located on the outermost side. Based on the electrode assembly inside the pouch case 114, the inner resin layer may be located on the innermost side, the outer resin layer may be located on the outermost side, and the metal layer may be located between the inner resin layer and the outer resin layer.

The outer resin layer has excellent tensile strength and weather resistance relative to the thickness and can exhibit electrical insulation properties in order to protect the electrode assembly from the outside. Such an outer resin layer may include a polyethylene terephthalate (PET) resin or a nylon resin. The metal layer can prevent air, moisture, and the like from flowing into the inside of the pouch-type secondary battery. This metal layer may include aluminum (Al). The inner resin layers may be thermally fused to each other by heat and/or pressure applied in a state in which the electrode assembly is embedded. This inner resin layer may include casted polypropylene (CPP) or polypropylene(PP).

The pouch case 114 is divided into two portions, and a concave-shaped housing part in which the electrode assembly can be seated may be formed in at least one of the two portions. Along the outer circumference of this housing part, the inner resin layers of the two portions of the pouch case 114 may be bonded to each other, so that the pouch case 114 is sealed. Thereby, the battery cell 110, which is a pouch-type secondary battery, can be produced.

The battery cells 110 may be configured in a plurality of numbers, and the plurality of battery cells 110 may be stacked so as to be electrically connected to each other, thereby forming a battery cell stack 120. In particular, as shown in FIG. 4, the plurality of battery cells 110 may be stacked along a direction parallel to the y-axis while standing upright so that one-side surfaces of the cell main body 113 faces each other. Thereby, the electrode leads 111 may protrude in a direction perpendicular to the direction in which the battery cells 110 are stacked. That is, in the battery cell 110, one electrode lead 111 may protrude toward the x-axis direction, and the other electrode lead 111 may protrude toward the -x-axis direction. If the electrode leads 111 are battery cells that protrude only in one direction, the electrode leads 111 may protrude in the x-axis direction or the -x-axis direction.

The module frame 200 may be intended to protect the battery cell stack 120 and the electrical components connected thereto from external physical impact. The battery cell stack 120 and the electrical components connected thereto may be housed in the internal space of the module frame 200.

The structure of the module frame 200 may have various shapes. According to certain embodiments of the present disclosure, the structure of the module frame 200 may be a mono-frame structure. Here, the mono-frame may be in the form of a metal plate in which the upper and lower surfaces (z-axis direction and -z-axis direction) and both side surfaces (y-axis direction and -y-axis direction) are integrated. The mono frame may be manufactured by extrusion molding.

However, the structure of the module frame 200 is not limited thereto, and in certain other embodiments, the module frame 200 may have a structure in which a U-shaped frame and an upper plate are coupled to each other. In this case, the U-shaped frame may have both side surfaces that extend upward from a lower surface and both edges of the lower surface, and the upper plate may be in a plate-like form. In this case, each frame or plate constituting the U-shaped frame may be manufactured by press molding. In addition, the structure of the module frame 200 may be provided as an L-shaped frame in addition to a mono-frame or a U-shaped frame, and may also be provided in various structures not described in the above-described embodiments.

The module frame 200 may have the form that is opened on both sides. More specifically, the module frame 200 may be provided in the form that is opened along the longitudinal direction of the battery cells 110. In this case, the front surface and rear surface of the battery cell stack 120 may not be covered by the module frame 200. The front surface and the rear surface of the battery cell stack 120 may be covered by the busbar assembly 300, the end plate 400, and the like, through which the front surface and rear surface of the battery cell stack 120 may be protected from external physical impact or the like.

The battery module 100 may include a busbar assembly 300 located on one side and the other side of the battery cell stack 120, respectively. Specifically, a busbar assembly 300 may be located respectively in both directions in which the electrode leads 111 of the battery cells 110 included in the battery cell stack 120 protrude. The busbar assembly 300 may electrically connect the battery cells 110 constituting the battery cell stack 120 in series or in parallel. The busbar assembly 300 may include a busbar frame 310, a busbar 320, and a terminal busbar, respectively.

The busbar frame 310 may be located on one surface of the battery cell stack 120 to cover one surface of the battery cell stack 120 and at the same time, guide the connection between the battery cell stack 120 and an external device. The busbar frame 310 may be located on two surfaces such as the front surface (x-axis direction) and the rear surface (-x-axis direction) of the battery cell stack 120.

A busbar 320 may be mounted on the busbar frame 310. Specifically, the inner surface of the busbar frame 310 may be connected to the front surface (x-axis direction) and the rear surface (-x-axis direction) of the battery cell stack 120, and the outer surface of the busbar frame 310 may be connected to the busbar 320.

The busbar frame 310 may include an electrically insulating material. The busbar frame 310 may limit contact of the busbar 320 with other portions of the battery cells 110 in addition to the portion bonded with the electrode lead (not shown), thereby preventing occurrence of an electrical short circuit.

The busbar 320 may be mounted on one surface of the busbar frame 310, and may be for electrically connecting the battery cell stack 120 or the battery cells 110 to the external device circuit. The busbar 320 is located on the busbar frame 310, and the busbar assembly 300 may be covered by the end plate 400 of FIG. 4, thereby protecting from external impacts, and the like, and minimizing deterioration of the durability of the battery due to external moisture and the like.

The busbar 320 may be electrically connected to the battery cell stack 120 through the electrode lead of the battery cell 110. Specifically, the electrode lead 111 of the battery cell 110 may be bent after passing through a slit formed in the busbar frame 310 to be connected to the busbar 320. The battery cells 110 constituting the battery cell stack 120 may be connected in series or in parallel by the busbar 320. The connection method between the electrode lead 111 and the busbar 320 is not particularly limited, and weld-bonding may be applied as an example.

Meanwhile, although not shown in FIGS. 3 and 4, the battery module 100 may be provided with a terminal busbar. The terminal busbar may include a first terminal busbar and a second terminal busbar, and the first terminal busbar and the second terminal busbar may have different polarities from each other.

The terminal busbar may be electrically connected to the busbar 320 or the electrode lead to electrically connect one battery module 100 to another battery module 100. The first terminal busbar and the second terminal busbar may be at least partially exposed to the outside of the end plate 400 in order to connect one battery module 100 to another external battery module 100, and the end plate 400 may be provided with a terminal busbar opening (not shown) for this purpose. The terminal busbar may be connected to another battery module 100 or a BDU (Battery Disconnect Unit) through a portion exposed through the terminal busbar opening, and may form an HV (High voltage) connection therewith.

The end plates 400 may be located on opened both sides (x-axis direction and - x-axis direction) of the module frame 200 and formed to cover the battery cell stack 120. The end plates 400 may physically protect the battery cell stack 120 and other electrical components from external impact.

The end plate 400 may be formed with a coolant opening 410 for allowing a coolant to flow in or out. The coolant opening 410 is an opening provided in the end plate 400, and is a hole passing through the end plate 400. Thereby, even if the end plate 400 is mounted, the coolant may be flowed in from the outside to the inside of the module frame 200 or may be flowed out from the inside to the outside of the module frame 200 through the coolant opening 410. The coolant opening 410 may be covered by an inlet port 510 or an outlet port 516 described below, and connected to the first coolant line 501 or the second coolant line 502, respectively.

The coolant opening 410 may be a hole formed to extend in the up-and-down direction (z-axis direction and -z-axis direction). The upper end of the coolant opening 410 may be located higher than the center on the basis of the height of the battery cell stack 120. The lower end of the coolant opening 410 may be located lower than the center on the basis of the height of the battery cell stack 120. Specifically, the length from the center of the coolant opening 410 to the upper end of the coolant opening 410 may be greater than or equal to the length from the upper edge of the end plate 400 to the upper end of the coolant opening 410. In addition, the length from the center of the coolant opening 410 to the lower end of the coolant opening 410 may be greater than or equal to the length from the lower edge of the end plate 400 to the lower end of the coolant opening 410. More specifically, the length from the upper end to the lower end of the coolant opening 410 may be between 0.5 and 0.9 times the length from the upper edge to the lower edge of the end plate 400.

The coolant may receive transfer of heat generated from the battery cell stack 120, the busbar assembly 300, and other electrical components housed inside the module frame 200, while being in direct contact with them.

The coolant may be a fluid. The coolant needs to be electrically insulated because it is in direct contact with the battery cell stack 120, the busbar assembly 300, and other electrical components inside the battery module 100. Therefore, the coolant may be an insulating coolant. In one embodiment, the coolant may be an insulating oil. However, the type of the coolant is not limited by those set forth above. For example, the coolant needs to be not ignited even when exposed to a high-temperature environment within the battery module 100, so that the coolant may be a nonflammable coolant.

That is, in the case of the present embodiments, the coolant can make direct contact with the battery cell stack 120, the busbar assembly 300, and other electrical components that generate heat in the battery module 100 and receive transfer of heat, thereby directly cooling them. Therefore, as compared to a conventional battery assembly that indirectly cools the battery module using a heat sink or the like, the battery module 100 according to certain embodiments of the present disclosure can improve the cooling efficiency through direct cooling, thereby extending the lifetime of the battery.

Meanwhile, although not shown in FIG. 4, the battery module 100 may further include a sealing assembly. The sealing assembly may be located on opened both sides of the module frame 200 and formed to cover the battery cell stack 120. That is, the sealing assembly may be disposed between the end plate 400 and the battery cell stack 120 to separate opened both sides of the module frame 200 from the external environment. Specifically, the sealing assembly may perform the role of sealing the coolant so that it does not leak to the outside when the coolant is injected into the inside of the module frame 200.

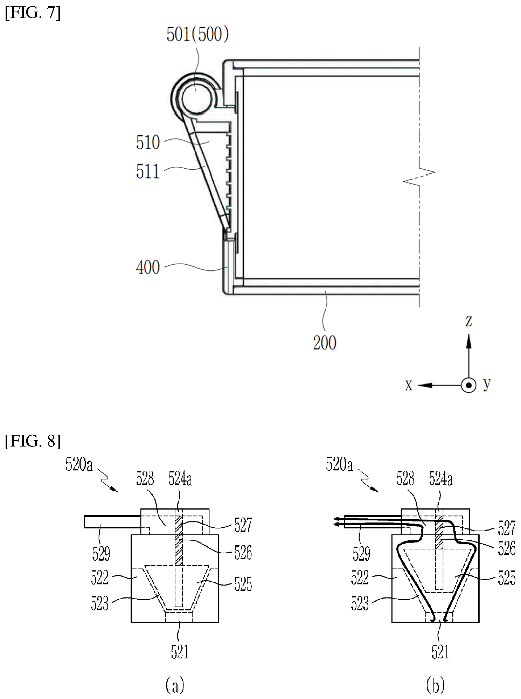

FIG. 6 is a view of the battery module of FIG. 3 as viewed along the -x-axis direction on the yz plane. FIG. 7 is a view of the inlet port as viewed along the -x-axis direction on the yz plane.

Referring to FIGS. 6 and 7, the battery module 100 includes an inlet port 510 and an outlet port 516 for circulating a coolant inside the module frame 200, and a coolant line 500 connected to the inlet port 510 and the outlet port 516, respectively. The coolant may pass through the heat exchanger 2200 from the coolant reservoir 2100 described later, move through the coolant line 500, then flow into the inside of the module frame 200 through the inlet port 510, flow out to the outside of the module frame 200 through the outlet port 516, and then be collected in the coolant reservoir 2100 through the coolant line 500. Meanwhile, since the outlet port 516 has the same shape and structure as the inlet port 510, illustration of the outlet port 516 is omitted in FIGS. 6 and 7. In the following, the description of the same or corresponding contents as those of the inlet port 510 will be omitted.

The coolant line 500 may include a first coolant line 501 connected to the inlet port 510 and a second cooling line 502 connected to the outlet port 516. The coolant line 500 may be a pipe-like member having rigidity to allow the coolant to flow.

The inlet port 510 may have a shape corresponding to the coolant opening 410 in order to cover the coolant opening 410. As described previously, since the coolant opening 410 is a hole extending in the up-and-down direction, the inlet port 510 may also be configured to extend in the up-and-down direction. Furthermore, the inlet port 510 may include a cover member 511 for covering the coolant opening 410 of the end plate 400. The cover member 511 may be formed to be inclined downward on a surface facing the coolant opening 410. Thereby, the inlet port 510 may decrease in cross-sectional area as it goes from the upper side to the lower side (-z-axis direction).

Putting together the shape and position in which the above-mentioned coolant opening 410 extends up and down, the lower end of the coolant opening 410 connected to the inlet port 510 may be located lower than the center on the basis of the height of the battery cell stack 120. That is, the lower end of the coolant opening 410 connected to the inlet port 510 may be located close to the lower edge of the end plate 400. In addition, the upper end of the coolant opening 410 connected to the outlet port 516 may be located higher than the center on the basis of the height of the battery cell stack 120. That is, the upper end of the coolant opening 410 connected to the outlet port 516 may be located close to the upper edge of the end plate 400.

If the lower end of the coolant opening 410 connected to the inlet port 510 is located higher than the center on the basis of the height of the battery cell stack 120, the coolant may flow into the inside of the battery module 100 as if it is falling from a high position, so that bubbles are likely to occur inside the coolant. These bubbles may become a factor that inhibits the cooling effect.

In addition, if the upper end of the coolant opening 410 connected to the outlet port 516 is located lower than the center on the basis of the height of the battery cell stack 120, the coolant flowing into the inside of the battery module 100 is filled only up to the height of the outlet port 516 and flows out to the outside, so that the inside of the battery module 100 may not be filled with a sufficient amount of coolant, which may result in a decrease in cooling performance.

It is preferable that the lower end of the coolant opening 410 connected to the inlet port 510 is located lower than the center on the basis of the height of the battery cell stack 120, and the upper end of the coolant opening 410 connected to the outlet port 516 is located higher than the center on the basis of the height of the battery cell stack 120.

Further, since the coolant opening 410 connected to the inlet port 510 extends in the up-and-down direction, the coolant flowing into the module frame 200 through the inlet port 510 can make overall contact with the battery cell stack 120. Similarly, the coolant making overall contact with the battery cell stack 120 may be flowed out to the outside of the module frame 200 through the outlet port 516. Therefore, since the coolant can flow without a portion stagnating within the module frame 200, the cooling performance can be enhanced.

Further, the coolant flowing in from the first coolant line 501 can flow along the inclined cover member 511 between the first coolant line 501 and the coolant opening 410. Therefore, since the coolant can flow into the inside of the battery module 100 without abrupt changes in the flowing direction, the possibility of bubbles being generated inside the coolant can be reduced.

Further, since the inlet port 510 increases in its cross-sectional area as it goes from the first coolant line 501 toward the coolant opening 410, the flow rate of the coolant flowing in from the first coolant line 501 decreases inside the inlet port 510. Therefore, since the flow rate is reduced in advance before the coolant flows into the inside of the module frame 200 and makes contact with the battery cell stack 120, abrupt changes in flow rate inside the module frame 200 can be reduced. Thereby, the possibility of bubbles being generated inside the coolant due to abrupt changes in flow rate can be reduced, and the time for which the coolant makes contact with the battery cell stack 120 can be increased, thereby improving the cooling performance.

FIG. 8 is a conceptual diagram showing an exemplary embodiment of the venting valve shown in FIG. 6. FIG. 8(a) shows the state of the venting valve 520a before the gas is vented, and FIG. 8(b) shows the state of the venting valve 520a while the gas is being vented.

First, in the battery module 100 according to certain embodiments of the present disclosure, since the coolant flows into the module frame 200 to cool the battery module 100, the sealing property of the battery module 100 is very excellent in order to prevent leakage of a coolant. That is, when vent gas is generated inside the battery module 100 at a certain temperature and pressure or higher, the vent gas can be primarily discharged to the outside of the module frame 200 through the coolant opening 410 formed to allow the coolant to flow in and out of the battery module 100. Thereby, the vent gas generated inside the battery module 100 can be diffused toward the adjacent battery module 100 through the coolant line 500. According to certain embodiments of the present disclosure, since the venting valve 520 is connected to the coolant line 500, the gas generated inside the battery module 100 can be vented through the venting valve 520 via the coolant line 500. Therefore, the vent gas diffusing along the coolant line 500 to the adjacent battery module 100 can be discharged from the coolant line 500, thereby reducing the pressure of the coolant line 500 and at the same time, preventing the vent gas from diffusing through the coolant line 500.

Referring to FIGS. 6 and 8, the venting valve 520 may be connected to the coolant line 500. More specifically, the venting valve 520 may be connected to each of the first coolant line 501 and the second coolant line 502. The venting valve 520 may discharge the gas in the coolant line 500 when the pressure of the coolant line 500 reaches a prescribed pressure due to the gas generated inside the battery module 100. That is, when the pressure of at least one of the first coolant line 501 and the second coolant line 502 reaches a prescribed pressure, the venting valve 520 may discharge the gas in the coolant line 500 that has reached a prescribed pressure among the first coolant line 501 and the second coolant line 502.

Referring to FIG. 8(a), the venting valve 520a may include: a valve inlet port 521 into which gas from a coolant line 500 flows, a main body part 522 that forms an internal space 523 through which the gas flowing into the valve inlet port 521 flows, a blocking member 525 that is movable to close the valve inlet port 521, a valve spring 527 that presses the blocking member 525, a cap part 524a through which the discharge direction of the gas is guided, and a valve outlet port 529 through which the gas is discharged.

The blocking member 525 is movable so as to be housed in the internal space 523 and close the valve inlet port 521, or to be space apart from the internal space 523 to form a first flow path through which gas flows. That is, the blocking member 525 is movable in the direction in which the valve shaft 526 extends from the cap part 524a toward the valve inlet port 521. In one embodiment, the valve shaft 526 is expandable in a telescopic manner, and the blocking member 525 is fixed to the end of the valve shaft 526, thereby movable in the extension direction of the valve shaft 526. In another embodiment, the valve shaft 526 extends through the blocking member 525, and the blocking member 525 is inserted into the valve shaft 526, thereby movable in the extension direction of the valve shaft 526. Meanwhile, the structure or method in which the blocking member 525 moves in the extension direction of the valve shaft 526 is not limited by those set forth above, and can be modified or changed in various ways.

The valve spring 527 may be disposed on the valve shaft 526 so as to press the blocking member 525 in the direction in which the blocking member 525 closes the valve inlet port 521. Thereby, the blocking member 525 can prevent the coolant of the coolant line 500 from flowing out to the outside through the venting valve 520 under a normal situation. If the vent gas is in a situation of being diffused through the coolant line 500, the pressure of the coolant line 500 usually reaches a prescribed pressure that is higher than the pressure at which the coolant circulates, and due to the high pressure environment generated in the coolant line 500, the blocking member 525 overcomes the pressing force of the valve spring 527 and moves in a direction spaced away from the internal space 523, thereby forming the first flow path. Therefore, the elastic coefficient of the valve spring 527 can be determined taking into consideration the pressure of the coolant line 500 when a thermal runaway phenomenon occurs in the battery module 100. However, the elastic coefficient of the valve spring 527 can be variously changed in accordance with the specifications of the battery module 100 and the battery pack including the same.

The gas flowing into the valve inlet port 521 moves to the cap part 524a along the first flow path that is inclined outward from the inside of the main body part 522. The high-temperature and/or high-pressure gas may decrease in temperature and/or pressure while passing through the inclined first flow path. Meanwhile, in the embodiment shown in FIG. 8, the first flow path is formed in an inclined shape, but is not limited by the shape shown in the figure. For example, the shape of the first flow path can be variously modified or changed in accordance with the cross-sectional shape of the internal space 523 in which the main body part 522 is formed.

The cap part 524a of the venting valve 520a shown in FIG. 8(a) may include a second flow path 528 that is formed so that the path of the gas flowing in from the first flow path of the main body part 522 is bent. Thereby, the discharge direction of the gas discharged from the venting valve 520a can be determined. For example, the gas discharged from the venting valve 520a can be bent in the second flow path 528 so that it proceeds in the direction in which the module frame 200 of the battery module 100 extends (x-axis or -x-axis direction). Therefore, the influence of the gas discharged from the venting valve 520a on the adjacent other battery module 100 can be minimized.

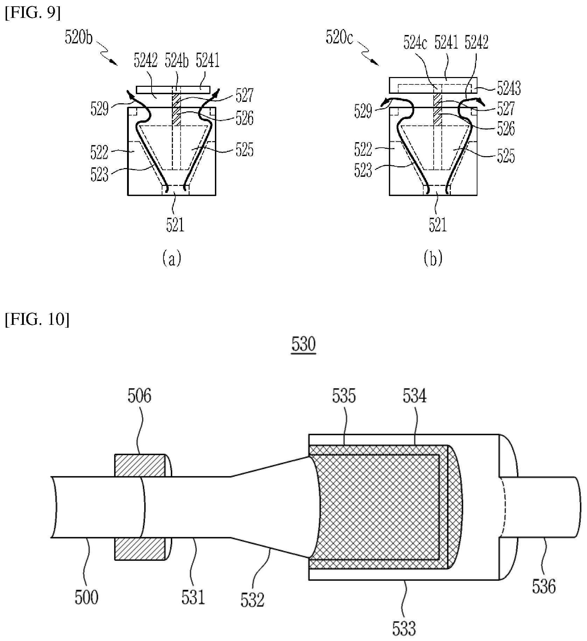

FIG. 9 is a conceptual diagram showing other exemplary embodiments of the venting valve shown in FIG. 8. FIG. 9(a) shows the state of the venting valve 520b while gas is being vented, and FIG. 9(b) shows the state of the venting valve 520c while gas is being vented.

Referring to FIG. 9(a), the cap part 524b of the venting valve 520b may include a plate-like part 5241 that is disposed so as to be spaced apart from the main body part 522 and face the internal space 523. Meanwhile, hereinafter, the description of the same or corresponding contents as those of the venting valve 520a described with reference to FIG. 8(a) will be omitted.

The separation space 5242 between the main body part 522 and the plate-like part 5241 may be opened so as to communicate with the outside. Gas having passed through the first flow path formed between the main body part 522 and the blocking member 525 may decrease in temperature and/or pressure while expanding in the separation space 5242 of the cap part 524b, and discharged to the outside of the battery module 100.

Referring to FIG. 9(b), the cap part 524c of the venting valve 520c may further include a skirt part 5243 that extends from the edge of the plate-like part 5241 toward the main body part 522. Meanwhile, hereinafter, the description of the same or corresponding contents as those of the venting valves 520a and 520b described with reference to FIG. 8(a) and FIG. 8(b) will be omitted.

The gas discharged to the outside of the battery module 100 through the separation space 5242 between the main body part 522 and the plate-like part 5241 is bent downward toward the venting valve 520c by the skirt part 5243 of the cap part 524c and discharged. It is therefore possible to prevent gas discharged from venting valve 520c from directly contacting the upper pack frame 1200 of the battery pack 1000, thereby preventing the upper pack frame 1200 from being damaged due to high temperature and/or high pressure gas.

FIG. 10 is a conceptual diagram showing an exemplary embodiment of the filter unit of FIG. 6.

Referring to FIGS. 6 and 10, the filter unit 530 may be connected to the coolant line 500. Specifically, the filter unit 530 may be disposed at at least one of: the coolant line 500 between the inlet port 510 and the venting valve 520 and between the outlet port 516 and the venting valve 520. More specifically, one filter unit 530 may be disposed in the first coolant line 501 between the inlet port 510 and the venting valve 520, or may be disposed in the second coolant line 502 between the outlet port 516 and the venting valve 520.

The filter unit 530 may include a filter inlet port 531 into which the coolant flows, a filter body part 533, a filter member 534 disposed within the filter body part 533 to filter the coolant flowing in from the filter inlet port 531, and a filter outlet port 536 through which the coolant filtered by the filter member 534 flows out. At this time, the filter member 534 may be a porous metal filter.

The coolant flowing through the coolant line 500 can pass through the filter member 534, but other foreign substances, and the like can be filtered by the filter member 534. In particular, high-temperature particles and/or flames moving through the coolant line 500 can be filtered by the filter member 534.

The inside of the vent gas emitted due to a thermal runaway phenomenon occurring within the battery module 100 may contain high-temperature particles such as active material particles or electrolyte in the form of sparks. In addition, flames may also be discharged together when the vent gas is discharged. Such a vent gas may be propagated to the adjacent battery module 100 via the coolant line 500. The filter unit 530 may be connected to the coolant line 500 to filter out the high-temperature particles and/or flames as mentioned above.

In addition, as mentioned above, the filter unit 530 may be disposed in the first coolant line 501 between the inlet port 510 and the venting valve 520. Alternatively, the filter unit 530 may be disposed in the second coolant line 502 between the outlet port 516 and the venting valve 520. That is, the gas generated in the battery module 100 may be filtered through the filter unit 530 before flowing into the venting valve 520. Therefore, since cooling of the high-temperature coolant moving in the coolant line 500 and/or filtering of the flame may be performed, it is possible to improve the operational reliability of the venting valve 520. Further, since the gas discharged through the venting valve 520 is gas having passed through the filter unit 530, it may be discharged in a state in which foreign substances inside have been removed and/or in a state in which the temperature has been reduced. Therefore, even if the gas having passed through the filter unit 530 is discharged through the venting valve 520, the influence on the adjacent battery module 100 can be reduced.

The filter inlet port 531 may include a diffusion part 532 whose cross-sectional area increases toward the filter member 534. The gas having flowed into the filter inlet port 531 may decrease in temperature and pressure while passing through the diffusion part 532 whose cross-sectional area increases. Therefore, the gas flowing into the filter unit 530 may be first decreased in temperature and pressure by the diffusion part 532, and then high-temperature particles and/or flames may be filtered by the filter member 534.

The connecting member 506 is a member that connects the coolant line 500 and the filter unit 530. That is, the connecting member 506 may connect the filter inlet port 531 of the filter unit 530 disposed in each of the first coolant line 501 and the second coolant line 502, and each of the first coolant line 501 and the second coolant line 502. The connecting member 506 can be coupled to the coolant line 500 and the filter unit 530 by a screw connection to connect the coolant line 500 and the filter unit 530 to each other. The connection between the filter unit 530 and the coolant line 500 can be more easily achieved through the connecting member 506. Meanwhile, the method by which the connecting member 506 fixes the coolant line 500 and the filter unit 530 is not limited by those set forth above, and can be modified and changed in various ways.

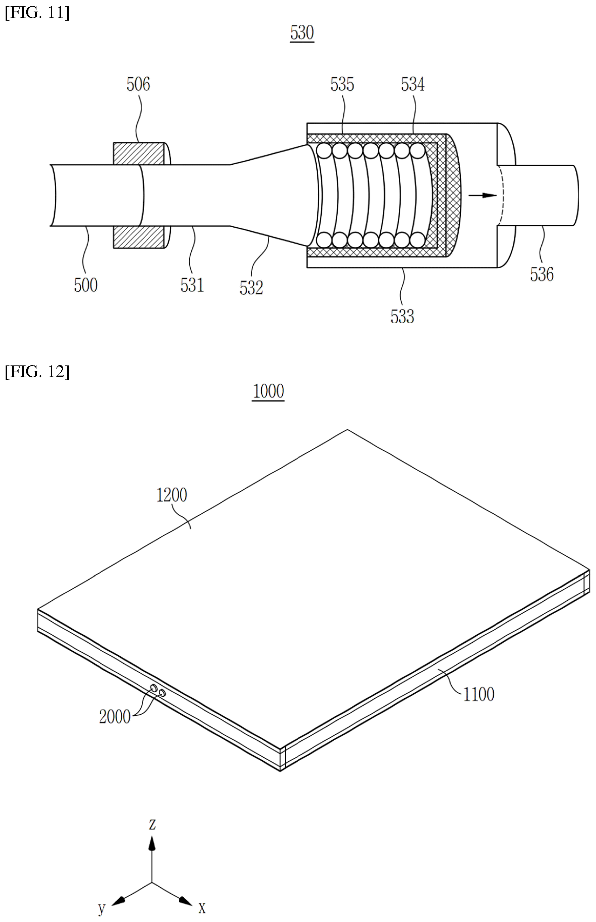

FIG. 11 is a conceptual diagram showing a modified embodiment of the filter unit shown in FIG. 10.

Referring to FIG. 11, the filter unit 530 may further include an elastic member 535 connected to the filter member 534. At this time, the filter member 534 is movable between a first position in which the coolant is filtered and a second position in which the coolant is bypassed. In the exemplary embodiment shown in FIG. 11, a state where the filter member 534 is located at the first position is shown.

The filter member 534 is maintained in the first position by the elastic member 535. When the coolant flows into the filter unit 530 and passes through the filter member 534, the filter member 534 receives pressure (force) in the direction in which the coolant flows. Thereby, the filter member 534 receives a force (pressure) to move to the second position where the coolant is bypassed. If a pressure (force) equal to or greater than a specified level is applied to the filter member 534, the filter member 534 may be damaged. To prevent this, when the pressure applied to the filter member 534 reaches a prescribed filter pressure, the filter member 534 may be moved from the first position to the second position. In this case, the prescribed filter pressure may be a pressure at which the force applied to the filter member 534 exceeds the restoring force by the elastic member 535.

When the pressure applied to the filter member 534 reaches a prescribed filter pressure, the pressure inside the filter unit 530 may increase due to the vent gas emitted due to a thermal runaway phenomenon occurring within the battery module 100. However, the above-mentioned cases are merely examples, and there may be a variety of cases in which the pressure applied to the filter member 534 reaches a prescribed filter pressure. For example, as foreign substances in the coolant flowing through the coolant line 500 accumulate in the filter member 534, the pressure applied to the filter member 534 increases, and when the foreign substances accumulate to be equal to or greater than a specified level in the filter member 534, the pressure applied to the filter member 534 may reach a prescribed filter pressure.

When the pressure applied to the filter member 534 reaches a prescribed filter pressure due to the above-mentioned cases, the filter member 534 moves from the first position to the second position, and the coolant flowing into the filter unit 530 may bypass the filter member 534 and flow out from the filter unit 530 through the filter outlet port 536 without being filtered by the filter member 534.

Meanwhile, although not shown in FIG. 11, the battery module 100 may further include a position sensor that senses movement of the filter member 534. The position sensor may sense that the filter member 534 moves from a first position to a second position. For example, the position sensor may include a Hall sensor (hall IC) that uses the Hall effect to sense a change in a magnetic field and generate a signal. The position sensor can generate an electrical signal when it senses that the filter member 534 moves from a first position to a second position. Whether a pressure equal to or greater than a prescribed filter pressure is applied to the filter member 534 can be monitored by the electrical signal generated from the position sensor.

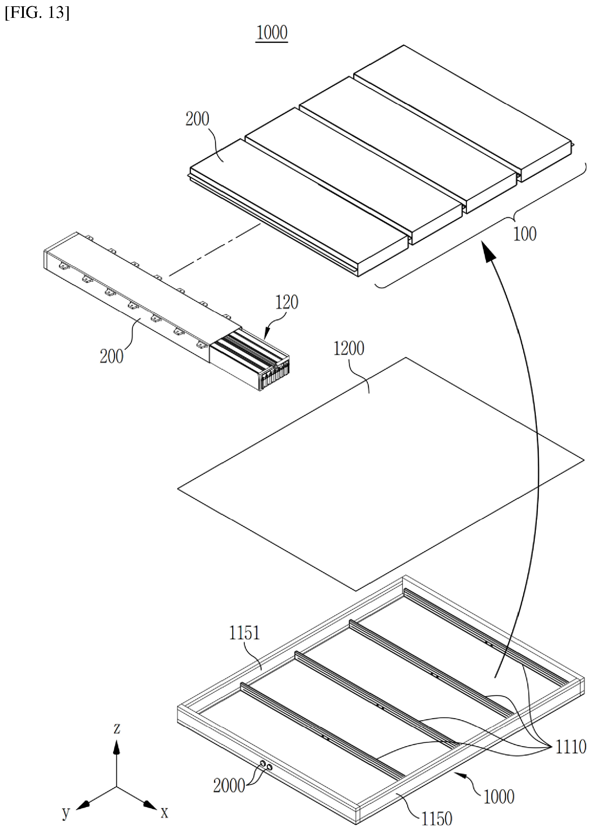

FIG. 12 is a perspective view of a battery pack including a battery module according to certain embodiments of the present disclosure. FIG. 13 is an exploded perspective view of the battery pack shown in FIG. 12.

Referring to FIGS. 12 and 13, the battery pack 1000 includes a lower pack frame 1100 on which a plurality of battery modules 100 are mounted and an upper pack frame 1200 located on an upper part of the battery modules 100. Here, the lower pack frame 1100 and the upper pack frame 1200 can be coupled to each other by a method such as welding to seal the inside of the battery pack 1000. In addition, a plurality of battery modules 100 may be mounted together with various control and protection systems such as a BMS (Battery Management System) and a BDU (Battery Disconnect Unit) to form a battery pack 1000.

The lower pack frame 1100 includes a side pack frame 1150 and at least two internal beams 1110 formed on the bottom surface of the lower pack frame 1100. Here, the bottom surface of the lower pack frame 1100 and the at least two internal beams 1110, and the bottom surface of the lower pack frame 1100 and the side pack frame 1150 may be coupled to each other by a method such as welding.

The plurality of battery modules 100 may be mounted in an area partitioned from each other by the side pack frame 1150 and at least two internal beams 1110. In other words, the plurality of battery modules 100 may be respectively disposed in an area between the side pack frame 1150 and the internal beams 1110, and an area located between adjacent internal beams 1110 to each other among the plurality of internal beams 1110. More specifically, in the battery pack 1000, the battery module 100 may be disposed between a pair of internal beams 1110 located adjacent to each other among the plurality of internal beams 1110 and the side pack frame 1150.

Therefore, the plurality of battery modules 100 are surrounded by at least two internal beams 1110 and the side pack frame 1150, so that each battery module 100 can be protected from external impact.

The side pack frame 1150 may be disposed on the edge of the bottom surface of the lower pack frame 1100, and may extend upward (in the z-axis direction) from the bottom surface of the lower pack frame 1100. More specifically, it may extend upward from each edge of the bottom surface of the lower pack frame 1100. Here, the upper end of the side pack frame 1150 may make contact with the upper pack frame 1200. At this time, the upper end of the side pack frame 1150 and the upper pack frame 1200 may be coupled to each other by a method such as welding, thereby sealing the inside of the battery pack 1000.

The plurality of internal beams 1110 may be spaced apart from each other. Here, the distance at which the adjacent internal beams 1110 are spaced apart from each other may be equal to or greater than the size of the battery module 100.

Further, the end of the internal beam 1110 may make contact with the inner surface 1151 of the side pack frame 1150. More specifically, both ends of the internal beam 1110 may make contact with the inner surface 1151 of the side pack frame 1150, respectively.

When a plurality of battery modules 100 are mounted on the lower pack frame 1100, each of the plurality of battery modules 100 may be connected to a coolant line 500. Specifically, the first coolant line 501 may be connected to an inlet port 510 of each of the plurality of battery modules 100, and the second coolant line 502 may be connected to an outlet port 516 of each of the plurality of battery modules 100.

In this case, the coolant line 500 connecting the plurality of battery modules 100 may extend through the upper part of the internal beam 1110. In another embodiment, the coolant line 500 connecting the plurality of battery modules 100 may extend through the internal beam 1110. However, the connection structure of the coolant line 500 connecting the plurality of battery modules 100 is not limited to those set forth above, and may be variously changed and modified in accordance with the arrangement of various components such as the plurality of battery modules 100 and the BMS (Battery Management System), BDU (Battery Disconnect Unit) disposed inside the battery pack 1000.

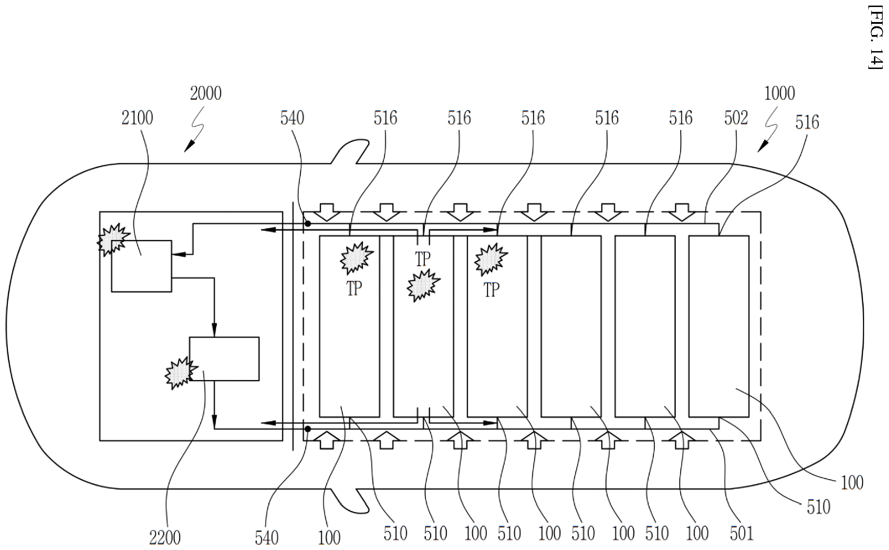

FIG. 14 is a conceptual diagram for explaining the positions at which the venting valve and filter unit are disposed in the battery pack.

Referring to FIG. 14, the battery pack 1000 may be connected to an external device 2000 including a coolant reservoir 2100, a heat exchanger 2200, and the like. In FIG. 14, only constituent elements for circulating the coolant are shown for convenience of explanation, but various constituent elements may be included depending on the device in which the battery pack 1000 is mounted.

The coolant stored in the coolant reservoir 2100 passes through the heat exchanger 2200 and then circulates along the coolant line 500 of the battery pack 1000. Specifically, the coolant having passed through the heat exchanger 2200 can be flowed into the inlet port 510 of each of the plurality of battery modules 100 via the first coolant line 501. The coolant having flowed into the battery modules 100 can cool the battery modules 100 and then flow out to the second coolant line 502 through the outlet port 516 of each of the plurality of battery modules 100. The coolant having flowed out to the second coolant line 502 can flow again into the coolant reservoir 2100.

As shown in FIG. 14, the venting valve 520 may be disposed between the inlet ports 510 of the plurality of battery modules 100 and between the outlet ports 516 of the plurality of battery modules 100. Therefore, even if a thermal runaway phenomenon occurs in any of the plurality of battery moules 100, the vent gas may be prevented from propagating to the adjacent battery module 100 by the venting valve 520 disposed between the plurality of battery modules 100.

A venting valve 520 may be further disposed between the uppermost stream of the first coolant line 501 and the inlet port 510 of the battery module 100 located most adjacent to the uppermost stream of the first coolant line 501. In addition, a venting valve 520 may also be further disposed between the lowermost stream of the second coolant line 502 and the outlet port 516 of the battery module 100 located most adjacent to the lowermost stream of the second coolant line 502. Therefore, even if a thermal runaway phenomenon occurs in the battery module 100 closest to the external device 2000 among the plurality of battery modules 100, it is possible to prevent gas from propagating to the external device 2000 by the venting valve 520 that is disposed between the uppermost stream of the first coolant line 501 and the battery module 100 disposed closest to the uppermost stream of the first coolant line 501 and between the lowermost stream of the second coolant line 502 and the battery module 100 disposed closest to the lowermost stream of the second coolant line 502.

A filter unit 530 may be disposed between each inlet port 510 of the plurality of battery modules 100 and the venting valve 520 located on the flowing direction side of the first coolant line 501 from the inlet port 510. In addition, the filter unit 530 may be further disposed between the uppermost stream of the first coolant line 501 and the venting valve 520 located most adjacent to the uppermost stream of the first coolant line 501. Furthermore, the filter unit 530 may be disposed between each outlet port 516 of the plurality of battery modules 100 and the venting valve 520 located on the flowing direction side of the second coolant line 502 from the outlet port 516. Therefore, the coolant circulating inside the battery pack 1000 may be filtered by the filter unit 530 before flowing into the venting valve 520.

The battery pack 1000 may include a pressure sensor 540 that measures the pressure of at least one of the first coolant line 501 and the second coolant line 502. More specifically, the pressure sensor 540 may be disposed in at least one of: between the uppermost stream of the first coolant line 501 and the filter unit 530 located most adjacent to the uppermost stream of the first coolant line 501, and between the lowermost stream of the second coolant line 502 and the filter unit 530 located most adjacent to the lowermost stream of the second coolant line 502.

The pressure sensor 540 measures the pressure of the coolant line 500, and can monitor whether the coolant is smoothly circulating along the coolant line 500. For example, if the filter member 534 of the filter unit 530 is clogged by foreign substances or the like, the pressure of the coolant line 500 measured by the pressure sensor 540 increases. Therefore, whether there is an abnormality in the circulation of the coolant line 500 of the battery pack 1000 can be monitored by the pressure sensor 540.

In addition, in the case of the filter unit 530 described with reference to FIG. 11, since the filter unit 530 in which a pressure equal to or greater than a prescribed filter pressure is applied to the filter member 534 can be specified by the position sensor that senses the position of the filter member 534, it is easy to specify the filter unit 530 in which an abnormality has occurred among the plurality of filter units 530 included in the battery pack 1000. Thereby, maintenance related to the circulation of coolant in the battery pack 1000 can be facilitated.

Furthermore, the battery module 100 and the battery pack 1000 including the same according to certain embodiments of the present disclosure can be applied to various external devices 2000. In certain embodiments shown in FIG. 14, an electric vehicle and a hybrid vehicle are shown as examples of such devices, but are not limited thereto. That is, the present disclosure can be applied to various devices that can use the battery module and the battery pack including the same. For example, it can be applied to transportation vehicles such as an electric bicycle and/or an energy storage system (ESS), which also fall within the scope of the present disclosure.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

100: battery module
110: battery cell
120: battery cell stack
200: module frame
300: busbar assembly
310: busbar frame
320: busbar
400: end plate
410: coolant opening
500: coolant line
506: connecting member
510: inlet port
511: cover member
516: outlet port
520: venting valve
530: filter unit
540: pressure sensor
1000: battery pack
1100: lower pack frame
1110: internal beam
1150: side pack frame
1200: upper pack frame
2000: external device
2100: coolant reservoir
2200: heat exchanger

## Claims

1. A battery module comprising:
a battery cell stack in which a plurality of battery cells are stacked;
a module frame that houses the battery cell stack;
a coolant line through which a coolant flows into the inside of the module frame or through which the coolant flows out from the inside of the module frame; and
a venting valve disposed in the coolant line,
wherein gas generated inside the battery module is discharged through the venting valve via the coolant line.

2. The battery module according to claim 1,
wherein the venting valve discharges gas in the coolant line when a pressure of the coolant line reaches a prescribed pressure.

3. The battery module according to claim 2,
wherein the venting valve comprises,
a valve inlet port into which gas in the coolant flows;
a main body part that forms an internal space through which the gas flowing into the valve inlet port flows; and
a blocking member that is housed in the internal space and movable to close the valve inlet port or to be spaced apart from the internal space to form a first flow path through which the gas flows.

4. The battery module according to claim 3,
wherein the blocking member further comprises an elastic member that presses the blocking member in a direction in which the blocking member closes the valve inlet port, and
the blocking member moves in a direction spaced apart from the internal space when the pressure of the coolant line reaches the prescribed pressure, thereby forming the first flow path.

5. The battery module according to claim 4,
wherein the venting valve further comprises,
a cap part through which the discharge direction of the gas is guided, and
a valve outlet port through which the gas is discharged.
wherein the cap part comprises a second flow path in which the path of gas flowing in from the main body part is bent.

6. The battery module according to claim 5,
wherein the cap part comprises a plate-like part spaced apart from the main body part and disposed so as to face the first flow path, and
the separation space between the main body part and the plate-like part is opened so as to communicate with the outside.

7. The battery module according to claim 6,
wherein the cap part further comprises a skirt part that extends from an edge of the plate-like part toward the main body part.

8. The battery module according to claim 1, further comprising:
an inlet port that is connected to the coolant line and through which a coolant flows into the inside of the module frame;
an outlet port that is connected to the coolant line and through which the coolant flows out from the inside of the module frame; and
a filter unit disposed at at least one of: between the inlet port and the venting valve and between the outlet port and the venting valve among the coolant lines.

9. The battery module according to claim 8,
wherein the filter unit comprises,
a filter inlet port into which a coolant flows; and
a filter member that filters the coolant flowing in from the filter inlet port.

10. The battery module according to claim 9,
wherein the filter inlet port comprises a diffusion part whose cross-sectional area increases as it goes toward the filter member.

11. The battery module according to claim 9,
wherein the filter unit further comprises an elastic member connected to the filter member,
the filter member is movable between a first position where the coolant is filtered and a second position where the coolant is bypassed,
the filter member is maintained in the first position by the elastic member, and
when the pressure applied to the filter member reaches a prescribed filter pressure, the filter member moves from the first position to the second position.

12. The battery module according to claim 11,
wherein the prescribed filter pressure is a pressure at which the force applied to the filter member exceeds a restoring force of the elastic member.

13. The battery module according to claim 11,
wherein the filter unit further comprises a position sensor that senses movement of the filter member from the first position to the second position.

14. The battery module according to claim 1,
wherein the coolant comprises an insulating coolant or a nonflammable coolant.

15. A battery pack comprising a plurality of battery modules according to claim 1,
wherein the coolant line comprises,
a first coolant line connected to the inlet port of each of the plurality of battery modules; and
a second coolant line connected to the outlet port of each of the plurality of battery modules.

16. The battery pack according to claim 15,
wherein the venting valve is disposed between the inlet ports of each of the plurality of battery modules and between the outlet ports of each of the plurality of battery modules, respectively.

17. The battery pack according to claim 16,
wherein the venting valve is further disposed between the uppermost stream of the first coolant line and the inlet port of the battery module disposed most adjacent to the uppermost stream, and between the lowermost stream of the second coolant line and the outlet port of the battery module disposed most adjacent to the lowermost stream, respectively.

18. The battery pack according to claim 17, further comprising:
a filter unit disposed between the inlet port of each of the plurality of battery modules and the venting valve located on the flowing direction side of the first coolant line from the inlet port, and between the outlet port of each of the plurality of battery modules and the venting valve located on the flowing direction side of the second coolant line from the outlet port, respectively.

19. The battery pack according to claim 18,
wherein the filter unit is further disposed between the uppermost stream of the first coolant line and the venting valve disposed most adjacent to the uppermost stream.

20. The battery pack according to claim 19,
further comprising a pressure sensor that measures the pressure of at least one of the first coolant line and the second coolant line,
wherein the pressure sensor is disposed at least one of: between the uppermost stream of the first coolant line and the filter unit disposed most adjacent to the uppermost stream, and between the lowermost stream of the second coolant line and the filter unit disposed most adjacent to the lowermost stream.

21. The battery pack according to claim 20,
further comprising a processor that outputs an alarm signal when the pressure measured by the pressure sensor deviates from a prescribed reference pressure.
